(19) Europäisches Patentamt
European Patent Office
Office européen des brevets

(11) **EP 4 071 703 A1**

(12) **EUROPEAN PATENT APPLICATION**

(43) Date of publication:
**12.10.2022 Bulletin 2022/41**

(21) Application number: **21206238.4**

(22) Date of filing: **03.11.2021**

(51) International Patent Classification (IPC):
**G06T 3/00** (2006.01)     **G08G 1/01** (2006.01)
**G08G 1/04** (2006.01)

(52) Cooperative Patent Classification (CPC):
**G06T 3/0062;** G08G 1/0116; G08G 1/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.12.2020 CN 202011393954**

(71) Applicant: **Apollo Intelligent Connectivity (Beijing) Technology Co., Ltd.**
**Beijing 100176 (CN)**

(72) Inventor: **YUAN, Libin**
**BEIJING, 100176 (CN)**

(74) Representative: **Brevalex**
**56, Boulevard de l'Embouchure**
**B.P. 27519**
**31075 Toulouse Cedex 2 (FR)**

(54) **ROADSIDE SENSING METHOD AND APPARATUS, STORAGE MEDIUM, PROGRAM PRODUCT, AND ROADSIDE EQUIPMENT**

(57) A sensing method and apparatus, and a storage medium are provided, which are related to a field of road cooperation of intelligent traffic. The specific implementation solution includes: acquiring a wide-angle image captured by a wide-angle camera; performing a de-distortion process on the wide-angle image, to obtain an image directly below the wide-angle camera; and performing a projective transformation on the wide-angle image to at least one viewing angle through a spherical projection model, to obtain at least one planar projection image, wherein each planar projection image corresponds to one viewing angle.

acquiring a wide-angle image captured by a wide-angle camera    S101

performing a de-distortion process on the wide-angle image, to obtain an image directly below the wide-angle camera    S102

performing a projective transformation on the wide-angle image to at least one viewing angle through a spherical projection model, to obtain at least one planar projection image, wherein each planar projection image corresponds to one viewing angle    S103

**FIG. 1**

EP 4 071 703 A1

**Description**

**TECHNICAL FIELD**

The disclosure relates to a field of intelligent traffic, in particular to, a field of vehicle-road cooperation.

**BACKGROUND**

Under the background of new infrastructure, a vehicle wireless communication technology (V2X, vehicle to everything) road-side sensing system provides over-the-horizon sensing information for vehicle-road coordinated vehicles. As one of the most important sensors of the roadside sensing system, the camera performs three-dimensional (3D) sensing on obstacles. The traditional roadside sensing method uses a plurality of cameras to cover the whole area, and sometimes a wide-angle camera (such as a fish-eye camera) is introduced to reduce the number of hardware devices. This approach suffers from the following disadvantages: firstly, more cameras must be used, the external parameter calibration cost of the cameras is high, the maintenance cost of the cameras in the later period is high, and the robustness of the sensing system can be reduced; secondly, although a plurality of cameras are used, a small misses blind area is difficult to avoid and difficult to solve.

**SUMMARY**

According to the present disclosure, it is provided a roadside sensing method and apparatus, an electronic device, and a storage medium.

According to an aspect of the present disclosure, it is provided a roadside sensing method, including:

acquiring a wide-angle image captured by a wide-angle camera;

performing a de-distortion process on the wide-angle image, to obtain an image directly below the wide-angle camera; and

performing a projective transformation on the wide-angle image to at least one viewing angle through a spherical projection model, to obtain at least one planar projection image, wherein each planar projection image corresponds to one viewing angle.

According to another aspect of the present disclosure, it is provided a roadside sensing apparatus, including:

an acquisition module for acquiring a wide-angle image captured by a wide-angle camera;

a de-distortion module for performing a de-distortion process on the wide-angle image, to obtain an image directly below the wide-angle camera; and

a projection module for performing a projective transformation on the wide-angle image to at least one viewing angle through a spherical projection model, to obtain at least one planar projection image, wherein each planar projection image corresponds to one viewing angle.

According to another aspect of the present disclosure, it is provided an electronic device, including:

at least one processor; and

a memory communicatively connected to the at least one processor, wherein

the memory stores instructions executable by the at least one processor, and the instructions, when executed by the at least one processor, enable the at least one processor to perform the above-mentioned method.

According to another aspect of the present disclosure, it is provided a non-transitory computer-readable storage medium storing computer instructions, wherein the computer instructions, when executed by a computer, cause the computer to perform the methods described above.

According to another aspect of the present disclosure, it is provided a roadside equipment including the electronic device as described above.

According to the present disclosure, by acquiring a wide-angle image, performing a de-distortion process on the wide-angle image and performing a projective transformation on the wide-angle image to different viewing angles to obtain an image directly below the wide-angle camera and planar projection with different viewing angles, blind zone-free sensing can be achieved by utilizing minimum camera configurations, so that maintenance cost of a sensing system can be reduced, and the robustness of a sensing system can be improved.

It is to be understood that the content described in this section is not intended to identify the key or critical features of embodiments of the present disclosure, nor is it intended to limit the scope of the disclosure. Other features of the present disclosure will become readily apparent from the following description.

**BRIEF DESCRIPTION OF THE DRAWINGS**

The accompanying drawings are included to provide a better understanding of the scheme and are not to be construed as limiting the present disclosure. In the drawings:

FIG. 1 is a flowchart for implementing a roadside sensing method according to an embodiment of the present disclosure;

FIG. 2A is a schematic diagram of a fish-eye image;

FIG. 2B is an image of a fish-eye image after performing a de-distortion process;

FIG. 3 is a flowchart for implementing step S103 in a sensing method according to an embodiment of the present disclosure;

FIG. 4 is a schematic diagram showing a spherical model of a fish-eye camera;

FIG. 5 is a schematic diagram showing a coordinate system of a fish-eye image;

FIG. 6 is a schematic diagram showing a manner of determining correspondence between pixel coordinates of a planar projection image and pixel coordinates of a wide-angle image in a roadside sensing method according to an embodiment of the present disclosure;

FIG. 7 is a schematic diagram showing performing a projective transformation on the wide-angle image to at least one viewing angle through a spherical projection model according to correspondence between pixel coordinates of a planar projection image and pixel coordinates of a wide-angle image in a roadside sensing method according to an embodiment of the present disclosure;

FIG. 8A is a gun-type planar projection diagram obtained by performing a projective transformation on a fish-eye image to viewing angle I;

FIG. 8B is a gun-type planar projection diagram obtained by performing a projective transformation on a fish-eye image to viewing angle II;

FIG. 8C is a gun-type planar projection diagram obtained by performing a projective transformation on a fish-eye image to viewing angle III;

FIG. 8D is a gun-type planar projection diagram obtained by performing a projective transformation on the fish-eye image to viewing angle IV;

FIG. 8E is a gun-type planar projection diagram obtained by performing a projective transformation on the fish-eye image to viewing angle V;

FIG. 8F is a gun-type planar projection diagram obtained by performing a projective transformation on the fish-eye image to viewing angle VI;

FIG. 9 is a schematic structural diagram showing a roadside sensing apparatus 900 according to an embodiment of the present disclosure;

FIG. 10 is a schematic structural diagram showing a roadside sensing apparatus 1000 according to an embodiment of the present disclosure; and

FIG. 11 is a block diagram of electronic device for implementing a roadside sensing method of an embodiment of the present disclosure.

## DETAILED DESCRIPTION

The following describes exemplary embodiments of the present disclosure with reference to the accompanying drawings, which includes various details of embodiments of the present disclosure to facilitate understanding and should be considered as merely exemplary. Accordingly, one of ordinary skilled in the art appreciates that various changes and modifications can be made to the embodiments described herein without departing from the scope and spirit of the present disclosure. Similarly, descriptions of well-known functions and structures are omitted from the following description for clarity and conciseness.

In a vehicle-road cooperative system, full-area coverage is performed by arranging a plurality of cameras on the roadside. How to use less hardware equipment to complete the blind zone-free full coverage sensing of the road junction, in order to reduce the cost and improve the stability of the system, is the focus of the vehicle-road cooperative current road-side visual sensing research.

In order to solve the above-mentioned issues, according to the present scheme, a wide-angle lens (such as a fish-eye lens) is arranged at a road junction, so that a blind zone-free sensing at the road junction in vehicle-road cooperation is realized.

Fish-eye lens is an extreme wide-angle lens with a focal length of 6-16 mm and a viewing angle is of more than 180 degrees. In order for the lens to reach the maximum photographing angle, the front lens of the lens is parabolic, protrudes forward, and is quite similar to the eyes of fish, so that the lens is called a fish eye lens. The fish-eye lens belongs to a special lens in an ultra-wide-angle lens, and the viewing angle of the fish-eye lens is striving to reach or exceed the range which can be seen by human eyes. The fish-eye lens differs greatly from the real-world mirror image in the human eye because the scene actually seen is a regular fixed form, and the picture effect produced by the fish-eye lens is beyond this category.

In embodiments of the present disclosure, it should be understood that the cameras, lenses, cameras, camera heads, etc. all represent devices that can acquire images within a coverage area, have similar meanings, and are interchangeable, to which no limitation is made in the present disclosure.

An embodiment of the disclosure provides a roadside sensing method, which can be applied to road junction blind zone-free sensing in a vehicle-road cooperation system. According to the embodiment of the disclosure, the dead-angle-free full-area coverage of the road junction is completed only by using a minimum number of fish-eye cameras, and for the conventional road junction, only four fish-eye cameras (one in each direction) are needed to complete a full-area sensing of the full road junction. Each fish-eye camera can obtain a two-dimensional image of the whole area through two steps: firstly, performing a de-distortion process on a fish-eye image by using an Ocam model or an OpenCV model to obtain an image right below the fish-eye camera; secondly, performing a projective transformation on the original image of the circular fish-eye camera into a planar perspective image with a specific viewing angle by using the spherical projection model. Reference will now be made to the accompany drawings, and specific embodiments are illustrated in detail.

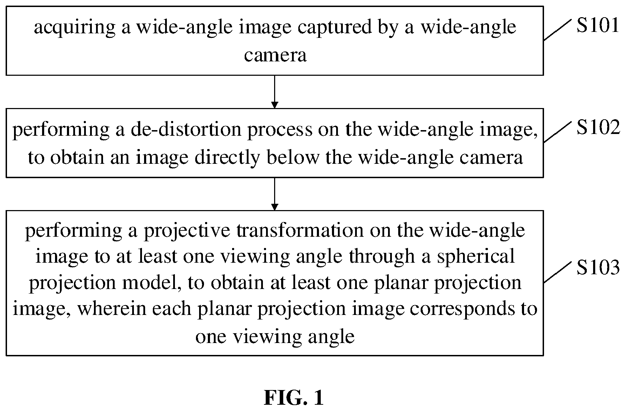

FIG. 1 is a flowchart for implementing a roadside sensing method according to an embodiment of the present disclosure, the method at least includes:

S101: acquiring a wide-angle image captured by a wide-angle camera;

S102: performing a de-distortion process on the wide-angle image, to obtain an image directly below the wide-angle camera; and

S103: performing a projective transformation on the wide-angle image to at least one viewing angle through a spherical projection model, to obtain at least one planar projection image, wherein each planar projection image corresponds to one viewing angle.

In an embodiment of the present disclosure, the wide-angle camera mentioned above may include a fish-eye camera, and the wide-angle image mentioned above may include a fish-eye image.

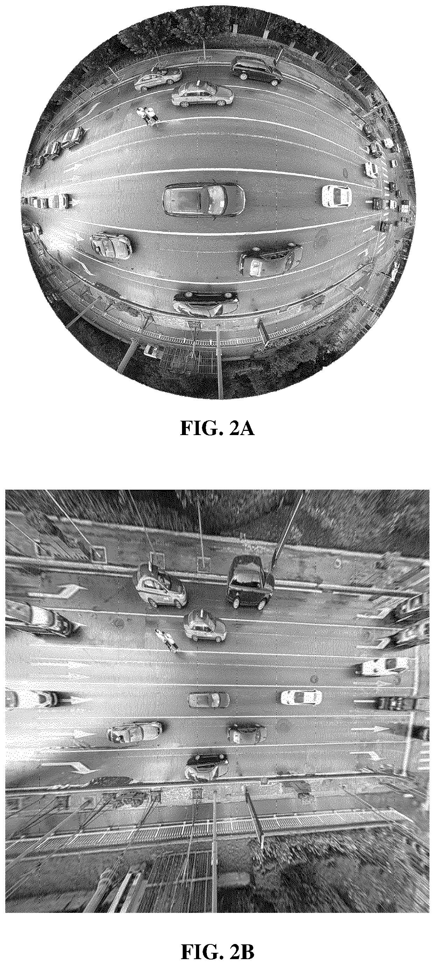

FIG. 2A is a schematic diagram of a fish-eye image. As can be seen from

FIG. 2A, the fish-eye image is a circular image, and the distortion of the image closer to the edge position is more serious, and the image closer to the central position is closer to the real world.

In S102, an Ocam module or an OpenCV model may be used to perform a de-distortion on the fish-eye image, and FIG. 2B is an image of a fish-eye image after performing a de-distortion process.

In an embodiment of the present disclosure, the fish-eye camera can be set at the position of the road junction, and a de-distortion process is performed on the fish-eye image shot by the fish-eye camera to obtain an image directly below the fish-eye camera.

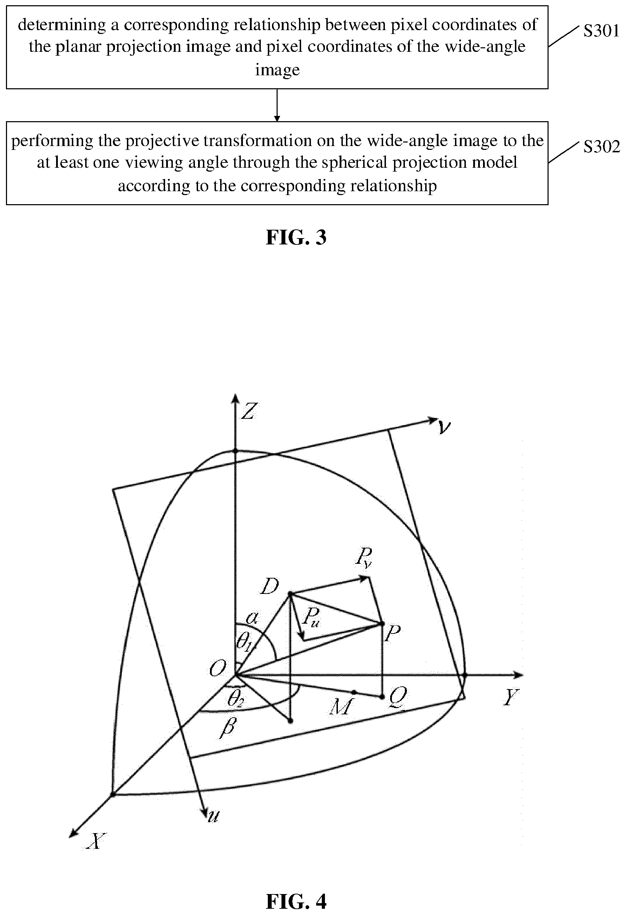

FIG. 3 is a flowchart for implementing step S103 in a sensing method according to an embodiment of the present disclosure. As shown in FIG. 3, the above-mentioned step S103 at least includes:

S301: determining a corresponding relationship between pixel coordinates of the planar projection image and pixel coordinates of the wide-angle image; and

S302: performing the projective transformation on the wide-angle image to the at least one viewing angle through the spherical projection model according to the corresponding relationship.

In order to clearly illustrate the specific implementation of S103, a detailed description will be given below with reference to the spherical model of the fish-eye camera.

FIG. 4 is a schematic diagram of a spherical model of a fish-eye camera. As shown in FIG. 4, the spherical model of the fish-eye camera employs an XYZ three-dimensional space coordinate system, and the planar projection image (which may also be referred to as a gun-type planar projection surface) employs an uv two-dimensional coordinate system. An 1/8 spherical surface is shown in FIG. 4, which is 1/4 of the spherical projection surface of the fish-eye camera. The spherical projection surface of the complete fish-eye camera is a hemisphere tangent to the XOY planar.

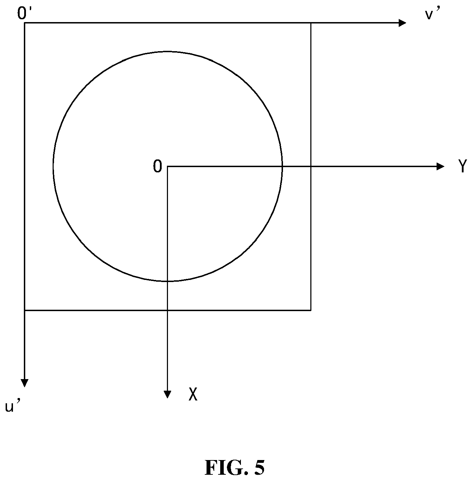

The fish-eye image is a circular image obtained by projecting a spherical projection surface of a fish-eye camera onto an XOY planar. FIG. 5 is a schematic diagram of a coordinate system of a fish-eye image, a circle in FIG. 5 represents a fish-eye image, and an O point represents a center point of the fish-eye image, which is a projection center of a spherical model of the fish-eye camera, namely, an origin point of an XYZ three-dimensional coordinate system. The fish-eye image adopts a u'v' two-dimensional coordinate system, the original point o' of the coordinate system is a point at an upper left corner of an extended area of the fish-eye image. With reference to FIG. 2A, the black area outside the circular fish-eye image shown in FIG. 2A is the extended area, and the point at the upper left corner of the black area is the origin o' of the coordinate system adopted by the fish-eye image.

After introducing the images and coordinate systems of FIGS. 4 and 5, embodiments of the present disclosure for performing a projective transformation on the wide-angle image (e.g., a circular fish-eye image) into a specific viewing angle through a spherical projection model and transforming the circular fish-eye image to a planar projection image (e.g., a gun-type image) at a certain viewing angle are described below on the basis of FIGS. 4 and 5 in specific implementations.

As shown in FIG. 4, a point O is a projection center of a spherical model of the fish-eye camera, a point D is a geometric center of a gun-type planar projection surface, the gun-type planar projection surface is tangent to the spherical projection surface of the fish-eye camera at a point D, $\theta1$ represents an included angle between $\overrightarrow{OD}$ and the Z-axis direction, and $\theta2$ represents an angle at which a projection from an X-axis direction to $\overrightarrow{OD}$ onto an XOY planar needs to rotate counterclockwise. A radius of the fish-eye image and a radius of the spherical projection surface are both r. Thus:

$$\overrightarrow{OD} = (r\sin\theta_1\cos\theta_2, \quad r\sin\theta_1\sin\theta_2, \quad r\cos\theta_1) \,.$$

Given P as arbitrary point on the gun-type planar projection surface, and projection point of P onto the XOY planar is Q. $\alpha$ is an angle from Z-axis to $\overrightarrow{OP}$ and $\beta$ is counterclockwise angle rotated from X-axis to $\overrightarrow{OQ}$. The coordinates of the point P and the point D on the correction image planar coordinate system are (up, vp) and ($u_D$, $v_D$), respectively. To facilitate the determination of the coordinates of point P in the space coordinate system, $\overrightarrow{DP}$ would be decomposed into $\overrightarrow{DP_u}$ and $\overrightarrow{DP_v}$, which are parallel to the u-axis and the v-axis, respectively. The geometric relation can be obtained as follows:

$$\overrightarrow{DP_u} = (u_P - u_D)(\cos\theta_1\cos\theta_2, \quad \cos\theta_1\sin\theta_2, \quad -\sin\theta_1) \,;$$

$$\overrightarrow{DP_v} = (v_D - v_P)(-\sin\theta_2, \quad \cos\theta_2, 0) \,;$$

$$\overrightarrow{DP} = \overrightarrow{DP_u} + \overrightarrow{DP_v} \,;$$

$$\overrightarrow{OP} = \overrightarrow{OD} + \overrightarrow{DP} \,.$$

The line OP intersects the spherical projection planar at a point the projection of which in the XOY planar is point M.

If the unit vectors of the XYZ three axes are respectively $\overrightarrow{X1}$, $\overrightarrow{Y1}$, and $\overrightarrow{Z1}$, accordingly:

$$\cos\alpha = \overrightarrow{OP} \bullet \overrightarrow{Z1} / \left|\overrightarrow{OP}\right| \,;$$

$$\left|\overrightarrow{OQ}\right| = \left|\overrightarrow{OP}\right| \times \sin\alpha \,;$$

$$\sin\beta = \overrightarrow{OP} \bullet \overrightarrow{Y1} / \left|\overrightarrow{OQ}\right| \,;$$

$$\cos\beta = \overrightarrow{OP} \bullet \overrightarrow{X1} / \left|\overrightarrow{OQ}\right| \,.$$

In the present embodiment, the radius of the fish-eye circular image is r=593 pixels, and θ=PI/2 at this time, the focal length of the fish-eye camera can be obtained from the equidistant projection model.

From the isometric projection model, equation (1) exists:

$$r = focal \times \theta \qquad ( 1 ).$$

Using r, θ and equation (1), focal can be obtained and focal is the focal length of the fish-eye camera.

Then the length $r_Q$ of $\overline{OP}$ projected onto the u'v' coordinate system at the moment is obtained from the value of focal, namely: $r_Q = focal \times \alpha$.

Thus, the pixel coordinates of the fish-eye circular image corresponding to the point P are as follows:

$$u'_Q = r_Q \times \sin \beta + u'_{center}$$

$$v'_Q = r_Q \times \cos \beta + v'_{center},$$

where ($u'_{center}$, $v'_{center}$) represents a center point pixel coordinate of the fish-eye circular image.

Therefore, the correspondence between the pixel coordinates of the gun-type surface projection planar and the pixel coordinates of the fish-eye circular image are obtained.

After that, a circular fish-eye camera original image is projected to a specific viewing angle through a spherical model, that is, a specific θ1 and $θ_2$ are selected, so that the fish-eye image can be equivalently transformed into a gun machine image at a certain angle.

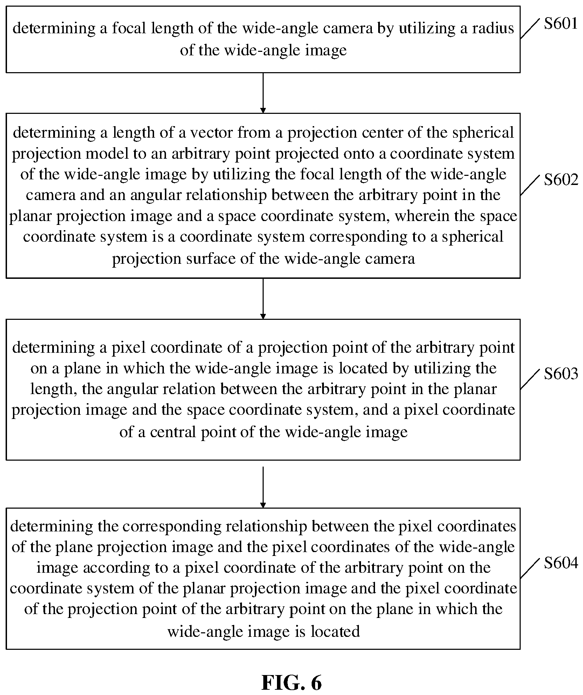

In combination with the figures, in an implementation of the present disclosure, the mode for determining the corresponding relationship between the pixel coordinates of the planar projection image and the pixel coordinates of the wide-angle image is shown in FIG. 6, which at least includes:

S601: determining a focal length of the wide-angle camera by utilizing a radius of the wide-angle image. By applying this step, the focal length of the wide-angle camera, i.e., the focal described above, can be determined by using the above equation (1).

S602: determining a length (as $r_Q$ described above) of a vector (as $\overline{OP}$ described above) from a projection center of the spherical projection model to arbitrary point to be projected onto a coordinate system of the wide-angle image by utilizing the focal length of the wide-angle camera and an angular relation (as $\alpha$ described above) between the arbitrary point in the planar projection image and a space coordinate system, wherein the space coordinate system is a coordinate system (such as the XYZ three-dimensional coordinate system described above) corresponding to a spherical projection surface of the wide-angle camera.

S603: determining a pixel coordinate (as $u'_Q$, $v'_Q$ described above) of a projection point of the arbitrary point on a planar in which the wide-angle image is located by utilizing the length, the angular relation (as sin β and cos β described above) between the arbitrary point in the planar projection image and the space coordinate system and a pixel coordinate (as $u'_{center}$ and $v'_{center}$ described above) of a central point of the wide-angle image; and

S604: determining the corresponding relationship between the pixel coordinates of the planar projection image and the pixel coordinates of the wide-angle image according to a pixel coordinate of the arbitrary point on the coordinate system of the planar projection image and the pixel coordinate of the projection point of the arbitrary point on the planar in which the wide-angle image is located.

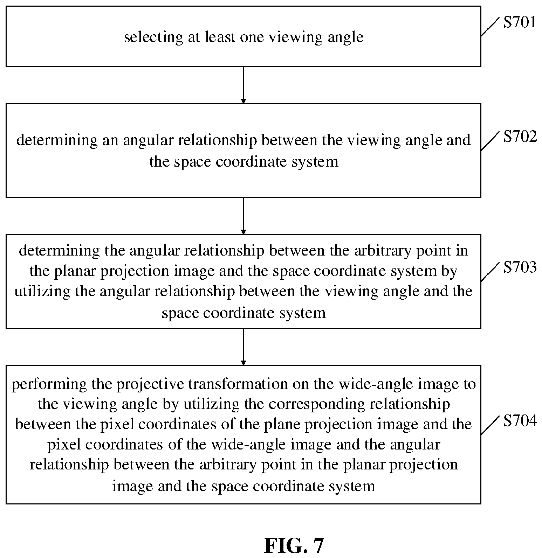

In combination with the above-mentioned figures, in an implementation of the present disclosure, according to a correspondence between pixel coordinates of a planar projection image and pixel coordinates of a wide-angle image, a mode of performing the projective transformation on the wide-angle image to at least one viewing angle through a spherical projection model is shown in FIG. 7, which at least includes:

S701: selecting at least one viewing angle;

S702: determining an angular relationship between the viewing angle and the space coordinate system (such as the above-mentioned θ1 and θ2);

S703: determining the angular relationship between the arbitrary point in the planar projection image and the space coordinate system by utilizing the angular relationship between the viewing angle and the space coordinate system (such as the above-mentioned $\alpha$ and $\beta$);

S704: performing the projective transformation on the wide-angle image to the viewing angle by utilizing the corresponding relationship and the angular relationship between the arbitrary point in the planar projection image and the space coordinate system.

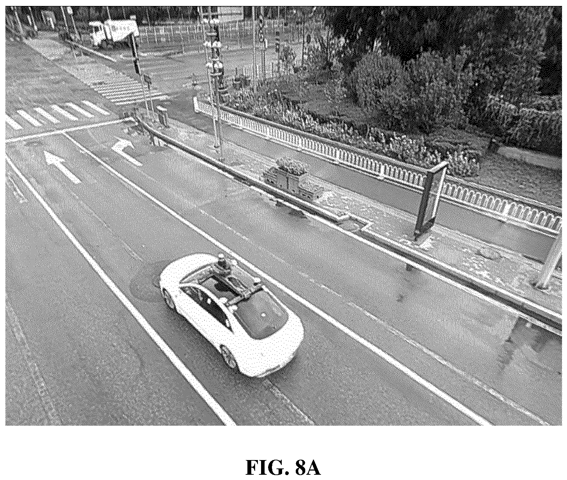

FIGS. 8A to 8F are gun-type surface projection diagrams obtained by performing a projective transformation on a fish-eye image to different viewing angles.

The viewing angles performed with projective transformation of FIG. 8A are $\theta 1=58°$ , $\theta 2=45°$ ;

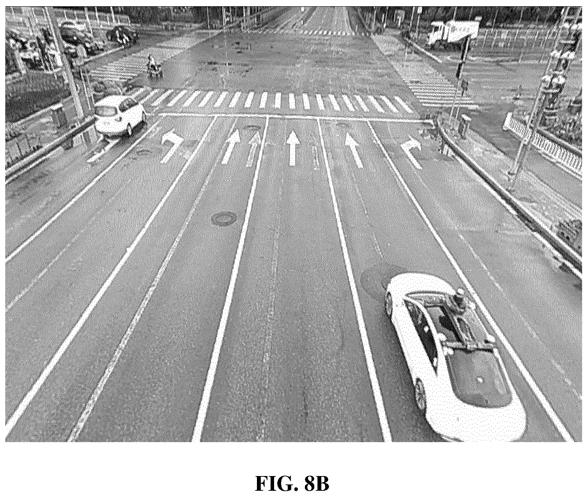

The viewing angles performed with projective transformation of FIG. 8B are $\theta 1=58°$ , $\theta 2=90°$ ;

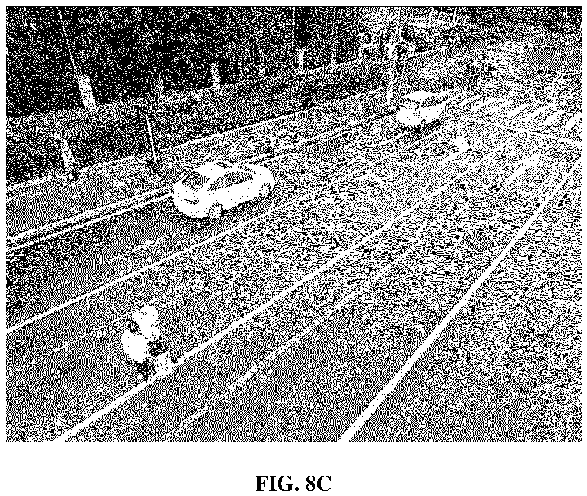

The viewing angles performed with projective transformation of FIG. 8C are $\theta 1=58°$ , $\theta 2=135°$ ;

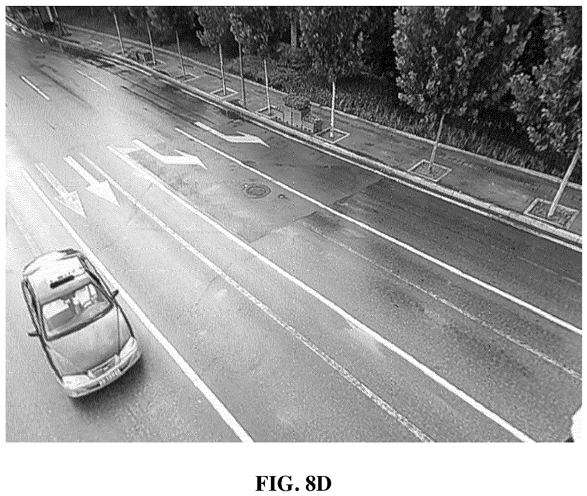

The viewing angles performed with projective transformation of FIG. 8D are $\theta 1=58°$ , $\theta 2=225°$ ;

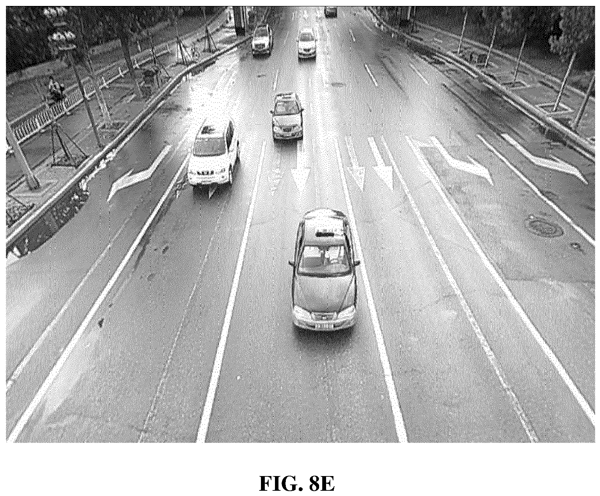

The viewing angles performed with projective transformation of FIG. 8E are $\theta 1=58°$ , $\theta 2=270°$ ;

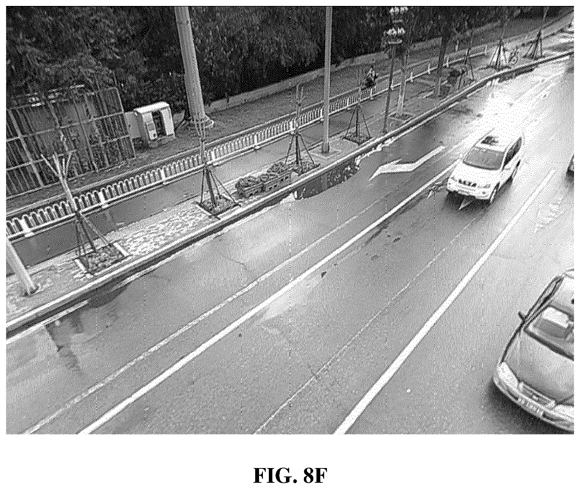

The viewing angles performed with projective transformation of FIG. 8F are $\theta 1=58°$ , $\theta 2=315°$

As can be seen, a fish-eye image projection is transformed to different viewing angles to obtain gun-type planar projection diagrams with different viewing angles, and blind zone-free sensing of a road junction can be realized. Therefore, according to the embodiment of the disclosure, the blind area-free coverage sensing in the whole area can be carried out by utilizing the minimum number of camera devices, and the hardware cost is greatly reduced. The more cameras are, the more resistance will make a certain camera move and so on, it is often necessary to maintain the camera or recalibrate the external parameters of the camera, which will lead to the decrease of the stability of the system. Therefore, the camera equipment is reduced, the later maintenance and operation cost can be greatly reduced, and the roadside sensing precision and robustness are indirectly improved.

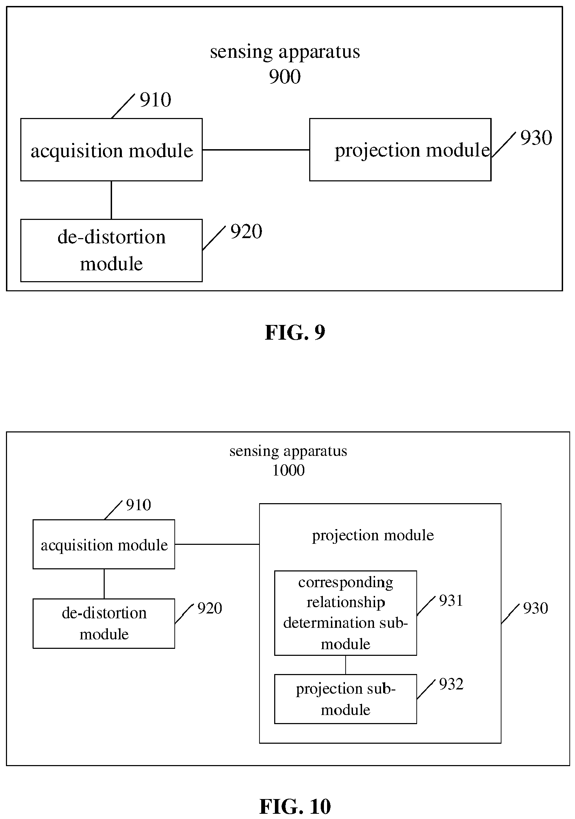

According to an embodiment of the disclosure, it is also provided a roadside sensing device, and FIG. 9 is a schematic structural diagram showing a roadside sensing apparatus 900 according to an embodiment of the present disclosure, which includes:

an acquisition module 910 for acquiring a wide-angle image captured by a wide-angle camera;

a de-distortion module 920 for performing a de-distortion process on the wide-angle image, to obtain an image directly below the wide-angle camera; and

a projection module 930 for performing a projective transformation on the wide-angle image to at least one viewing angle through a spherical projection model, to obtain at least one planar projection image, wherein each planar projection image corresponds to one viewing angle.

FIG. 10 is a schematic structural diagram showing a roadside sensing apparatus 1000 according to an embodiment of the present disclosure. Optionally, the above projection module 930 includes:

a corresponding relationship determination sub-module 931 for determining a corresponding relationship between pixel coordinates of the planar projection image and pixel coordinates of the wide-angle image; and

a projection sub-module 932 for performing the projective transformation on the wide-angle image to the at least one viewing angle through the spherical projection model according to the corresponding relationship.

Optionally, the above corresponding relationship determination sub-module 931 is configured for:

determining a focal length of the wide-angle camera by utilizing a radius of the wide-angle image;

determining a length of a vector from a projection center of the spherical projection model to an arbitrary point projected onto a coordinate system of the wide-angle image by utilizing the focal length of the wide-angle camera and an angular relationship between the arbitrary point in the planar projection image and a space coordinate system, wherein the space coordinate system is a coordinate system corresponding to a spherical projection surface of the wide-angle camera;

determining a pixel coordinate of a projection point of the arbitrary point on a planar in which the wide-angle image is located by utilizing the length, the angular relation between the arbitrary point in the planar projection image and the space coordinate system, and a pixel coordinate of a central point of the wide-angle image; and

determining the corresponding relationship between the pixel coordinates of the planar projection image and the pixel coordinates of the wide-angle image according to a pixel coordinate of the arbitrary point on the coordinate system of the planar projection image and the pixel coordinate of the projection point of the arbitrary point on the planar in which the wide-angle image is located.

Optionally, the projection sub-module 932 described above is used for:

selecting at least one viewing angle;

determining an angular relationship between the viewing angle and the space coordinate system;

determining the angular relationship between the arbitrary point in the planar projection image and the space coordinate system by utilizing the angular relationship between the viewing angle and the space coordinate system; and

performing the projective transformation on the wide-angle image to the viewing angle by utilizing the corresponding relationship and the angular relationship between the arbitrary point in the planar projection image and the space coordinate system.

Alternatively, the wide-angle camera includes a fish-eye camera, and the wide-angle image includes a fish-eye image.

Alternatively, the wide-angle camera is provided at a road junction with one wide-angle camera provided in each direction of the road junction.

The function of respective modules in respective apparatuses of embodiments of the present disclosure can be referred to corresponding descriptions of the above-mentioned method, which will not be repeated in detail here.

The roadside sensing method and apparatus provided by embodiments of the present disclosure can be applied to various types of road conditions, such as crossroads, T-shaped crossroads, L-shaped crossroads and the like, and the disclosure is not limited the roadside sensing method and apparatus. For the case that roads exist on both sides of the road junction, a projective transformation mode can refer to the mode of the embodiment. In a case that at only one side of a road junction is provided with road, a projective transformation can be carried out only according to the traffic flow direction, and data acquisition can be carried out on the traffic flow direction.

According to an embodiment of the present disclosure, the present disclosure also provides an electronic device and a readable storage medium. In addition, the disclosure also provides a roadside equipment which includes the foregoing mentioned electronic device.

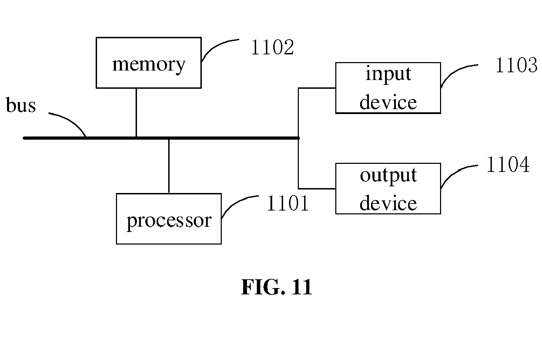

FIG. 11 is a block diagram of electronic device used to implement a roadside sensing method of an embodiment of the present disclosure. The electronic device is intended to represent various forms of digital computers, such as laptop computers, desktop computers, workbenches, personal digital assistants, servers, blade servers, mainframe computers, and other suitable computers. Electronic apparatuses may also represent various forms of mobile devices, such as personal digital assistants, cellular phones, smart phones, wearable devices, and other similar computing devices. The components shown herein, their connections and relationships, and their functions are merely examples, and are not intended to limit the implementation of the present disclosure described and/or claimed herein.

As shown in FIG. 11, the electronic device includes: one or more processors 1101, memory 1102, and interfaces for connecting various components, including high-speed interface and low-speed interface. The various components are interconnected using different buses and may be installed on a common motherboard or otherwise as desired. The processor may process instructions for execution within a classical computer, including instructions stored in the memory or on the memory to display graphical information of the GUI on an external input/output device, (such as display equipment coupled to the interface). In other implementation modes, multiple processors and/or multiple buses may be used with multiple memories and multiple memories, if desired. Also, multiple classical computers may be connected, each piece of equipment providing some of the necessary operations (e.g., as an array of a server, one set of blade servers, or a multiprocessor system). An example of one processor 1101 is shown in FIG. 11.

The memory 1102 is a non-transitory computer-readable storage medium provided herein. Where the memory stores an instruction executable by at least one processor to cause the at least one processor to execute the simulation method in quantum control provided herein. The non-transitory computer-readable storage medium of the present disclosure stores computer instructions for causing a computer to execute the simulation method in quantum control provided herein.

The memory 1102, as a non-transitory computer-readable storage medium, may be used to store non-transitory software programs, non-transitory computer-executable programs, and modules, such as program instructions/modules (e.g., the acquisition module 910, the de-distortion module 920, and the projection module 930 shown in FIG. 9) corresponding to sensing methods in embodiments of the present disclosure. The processor 1101 executes various functional present disclosures and data processing of the server, i.e., implementing the sensing method in the above-described method embodiment, by running non-transient software programs, instructions, and modules stored in the memory 1102.

The memory 1102 may include a storage program area and a storage data area. The storage program area may store an operating system and an application program required for at least one function. The storage data area may store data or the like created according to the usage of the classical computer of the simulation method in quantum control. In addition, the memory 1102 may include high-speed random-access memory, and may also include non-transitory memory, such as at least one disk storage component, flash memory component, or other non-transitory solid state storage components. In some embodiments, the memory 1102 optionally includes memory remotely set relative to the processor 1101. The remote memory may be connected to the classical computer of the simulation method in quantum control via a network. Instances of such networks include, but are not limited to, the Internet, intranets, local area networks, mobile communication networks, and combinations thereof.

The electronic device of the sensing method may further include: input device 1103 and output device 1104. The processor 1101, the memory 1102, the input device 1103, and the output device 1104 may be connected by a bus or otherwise, as exemplified in FIG. 11 by a bus connection.

The input device 1103 may receive input numeric or character information and generate key signal inputs related to user settings and functional controls of the sensed electronic equipment, such as input devices of touch screens, keypads, mice, track pads, touch pads, pointing sticks, one or more mouse buttons, track balls, joysticks, etc. The output device 1104 may include display devices, auxiliary lighting devices (e.g., LEDs), tactile feedback devices (e.g., vibration motors), and the like. The display device may include, but is not limited to, a liquid crystal display (LCD), a light emitting diode (LED) display, and a plasma display. In some embodiments, the display device may be a touch screen.

Various embodiments of the systems and techniques described herein may be implemented in digital electronic circuit systems, integrated circuit systems, disclosure specific ASICs (disclosure specific integrated circuits), computer hardware, firmware, software, and/or combinations thereof. These various embodiments may be embodied in one or more computer programs, which can be executed and/or interpreted on a programmable system including at least one programmable processor, which can be a dedicated or general-purpose programmable processor, and can receive data and instructions from, and transmit data and instructions to, a memory system, at least one input device, and at least one output device, and the at least one output device.

These computing programs (also referred to as programs, software, software disclosures, or code) include machine instructions of a programmable processor, and may be implemented using high-level procedural and/or object-oriented programming languages, and/or assembly/machine languages. As used herein, the terms "machine-readable medium" and "computer-readable medium" refer to any computer program product, equipment, and/or device (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide interaction with a user, the systems and techniques described herein may be implemented on a computer having: a display device (e.g., a CRT (cathode ray tube) or LCD (liquid crystal display) monitor) for displaying information to a user; and a keyboard and a pointing device (e.g., a mouse or a trackball) through which a user can provide input to the computer. Other types of devices may also be used to provide interaction with a user. For example, the feedback provided to the user may be any form of sensory feedback (e.g., visual feedback, auditory feedback, or tactile feedback); and input from the user may be received in any form, including acoustic input, voice input, or tactile input.

The systems and techniques described herein may be implemented in a computing system that includes a background component (e.g., as a data server), or a computing system that includes a middleware component (e.g., an disclosure server), or a computing system that includes a front-end component (e.g., a user computer having a graphical user interface or a web browser, wherein a user may interact with embodiments of the systems and techniques described herein through the graphical user interface or the web browser), or in a computing system that includes any combination of such background components, middleware components, or front-end components. The components of the system may be interconnected by any form or medium of digital data communication (e.g., a communication network). Examples of communication networks include: local Area Networks (LANs), Wide Area Networks (WANs), and the Internet.

A computer system may include a client and a server. The client and server are typically remote from each other and typically interact through a communication network. The relation of the client and the server is generated by computer programs running on respective computers and having a client-server relation with each other. The server can be a cloud server, also called a cloud computing server or a cloud host, is a host product in a cloud computing service system, and solves the defects of high management difficulty and weak business expansibility in the traditional physical host and virtual private server (VPS) service.

It should be understood that the various forms of flow, reordering, adding or removing steps shown above may be used. For example, the steps recited in the present disclosure may be performed in parallel or sequentially or may be performed in a different order, so long as the desired results of the technical solutions disclosed in the present disclosure can be achieved, and no limitation is made herein.

The above-mentioned embodiments are not to be construed as limiting the scope of the present disclosure. It will be apparent to those skilled in the art that various modifications, combinations, sub-combinations and substitutions are possible, depending on design requirements and other factors. Any modifications, equivalents, and improvements within the spirit and principles of this disclosure are intended to be included within the scope of this disclosure.

**Claims**

1. A roadside sensing method, comprising:

   acquiring (S101) a wide-angle image captured by a wide-angle camera;
   performing (S102) a de-distortion process on the wide-angle image, to obtain an image directly below the wide-angle camera; and
   performing (S103) a projective transformation on the wide-angle image to at least one viewing angle through a spherical projection model, to obtain at least one planar projection image, wherein each planar projection image corresponds to one viewing angle.

2. The method according to claim 1, wherein performing (S103) the projective transformation on the wide-angle image to at least one viewing angle through the spherical projection model comprises:

   determining (S301) a corresponding relationship between pixel coordinates of the planar projection image and pixel coordinates of the wide-angle image; and
   performing (S302) the projective transformation on the wide-angle image to the at least one viewing angle through the spherical projection model according to the corresponding relationship.

3. The method according to claim 2, wherein determining (S301) the corresponding relationship between the pixel coordinates of the planar projection image and the pixel coordinates of the wide-angle image comprises:

   determining (S601) a focal length of the wide-angle camera by utilizing a radius of the wide-angle image;
   determining (S602) a length of a vector from a projection center of the spherical projection model to an arbitrary point projected onto a coordinate system of the wide-angle image by utilizing the focal length of the wide-angle camera and an angular relationship between the arbitrary point in the planar projection image and a space coordinate system, wherein the space coordinate system is a coordinate system corresponding to a spherical projection surface of the wide-angle camera;
   determining (S603) a pixel coordinate of a projection point of the arbitrary point on a planar in which the wide-angle image is located by utilizing the length, the angular relation between the arbitrary point in the planar projection image and the space coordinate system, and a pixel coordinate of a central point of the wide-angle image; and
   determining (S604) the corresponding relationship between the pixel coordinates of the planar projection image and the pixel coordinates of the wide-angle image according to a pixel coordinate of the arbitrary point on the coordinate system of the planar projection image and the pixel coordinate of the projection point of the arbitrary point on the planar in which the wide-angle image is located.

4. The method according to claim 3, wherein performing (S301) the projective transformation on the wide-angle image to the at least one viewing angle through the spherical projection model according to the corresponding relationship comprises:

   selecting (S701) at least one viewing angle;
   determining (S702) an angular relationship between the viewing angle and the space coordinate system;
   determining (S703) the angular relationship between the arbitrary point in the planar projection image and the space coordinate system by utilizing the angular relationship between the viewing angle and the space coordinate system; and
   performing (S704) the projective transformation on the wide-angle image to the viewing angle by utilizing the corresponding relationship and the angular relationship between the arbitrary point in the planar projection image and the space coordinate system.

5. The method according to any one of claims 1 to 4, wherein the wide-angle camera comprises a fish-eye camera and the wide-angle image comprises a fish-eye image.

6. The method according to any one of claims 1 to 5, wherein the wide-angle camera is provided at a road junction with one wide-angle camera provided in each direction of the road junction.

7. A roadside sensing apparatus (900), comprising:

an acquisition module (910) for acquiring a wide-angle image captured by a wide-angle camera;
a de-distortion module (920) for performing a de-distortion process on the wide-angle image, to obtain an image directly below the wide-angle camera; and
a projection module (930) for performing a projective transformation on the wide-angle image to at least one viewing angle through a spherical projection model, to obtain at least one planar projection image, wherein each planar projection image corresponds to one viewing angle.

8. The apparatus according to claim 7, wherein the projection module (930) comprises:

a corresponding relationship determination sub-module (931) for determining a corresponding relationship between pixel coordinates of the planar projection image and pixel coordinates of the wide-angle image; and
a projection sub-module (932) for performing the projective transformation on the wide-angle image to the at least one viewing angle through the spherical projection model according to the corresponding relationship.

9. The apparatus according to claim 8, wherein the corresponding relationship determination sub-module (931) is configured for:

determining a focal length of the wide-angle camera by utilizing a radius of the wide-angle image;
determining a length of a vector from a projection center of the spherical projection model to an arbitrary point projected onto a coordinate system of the wide-angle image by utilizing the focal length of the wide-angle camera and an angular relationship between the arbitrary point in the planar projection image and a space coordinate system, wherein the space coordinate system is a coordinate system corresponding to a spherical projection surface of the wide-angle camera;
determining a pixel coordinate of a projection point of the arbitrary point on a planar in which the wide-angle image is located by utilizing the length, the angular relation between the arbitrary point in the planar projection image and the space coordinate system, and a pixel coordinate of a central point of the wide-angle image; and
determining the corresponding relationship between the pixel coordinates of the planar projection image and the pixel coordinates of the wide-angle image according to a pixel coordinate of the arbitrary point on the coordinate system of the planar projection image and the pixel coordinate of the projection point of the arbitrary point on the planar in which the wide-angle image is located.

10. The apparatus according to claim 9, wherein the projection sub-module (932) is configured for:

selecting at least one viewing angle;
determining an angular relationship between the viewing angle and the space coordinate system;
determining the angular relationship between the arbitrary point in the planar projection image and the space coordinate system by utilizing the angular relationship between the viewing angle and the space coordinate system; and
performing the projective transformation on the wide-angle image to the viewing angle by utilizing the corresponding relationship and the angular relationship between the arbitrary point in the planar projection image and the space coordinate system.

11. The apparatus according to any one of claims 7 to 10, wherein the wide-angle camera comprises a fish-eye camera and the wide-angle image comprises a fish-eye image.

12. The apparatus according to any one of claims 7 to 11, wherein the wide-angle camera is provided at a road junction with one wide-angle camera provided in each direction of the road junction.

13. A non-transitory computer-readable storage medium storing computer instructions, wherein the computer instructions, when executed by a computer, cause the computer to perform the method of any of claims 1 to 6.

14. A computer program product comprising instructions which, when the program is executed by a computer, cause the computer to perform the method of any one of claims 1 to 6.

15. A roadside equipment comprising the electronic device of claim 13.

acquiring a wide-angle image captured by a wide-angle camera ⟋ S101

performing a de-distortion process on the wide-angle image, to obtain an image directly below the wide-angle camera ⟋ S102

performing a projective transformation on the wide-angle image to at least one viewing angle through a spherical projection model, to obtain at least one planar projection image, wherein each planar projection image corresponds to one viewing angle ⟋ S103

**FIG. 1**

**FIG. 2A**

**FIG. 2B**

determining a corresponding relationship between pixel coordinates of the planar projection image and pixel coordinates of the wide-angle image

S301

performing the projective transformation on the wide-angle image to the at least one viewing angle through the spherical projection model according to the corresponding relationship

S302

**FIG. 3**

**FIG. 4**

**FIG. 5**

determining a focal length of the wide-angle camera by utilizing a radius of the wide-angle image — S601

determining a length of a vector from a projection center of the spherical projection model to an arbitrary point projected onto a coordinate system of the wide-angle image by utilizing the focal length of the wide-angle camera and an angular relationship between the arbitrary point in the planar projection image and a space coordinate system, wherein the space coordinate system is a coordinate system corresponding to a spherical projection surface of the wide-angle camera — S602

determining a pixel coordinate of a projection point of the arbitrary point on a plane in which the wide-angle image is located by utilizing the length, the angular relation between the arbitrary point in the planar projection image and the space coordinate system, and a pixel coordinate of a central point of the wide-angle image — S603

determining the corresponding relationship between the pixel coordinates of the plane projection image and the pixel coordinates of the wide-angle image according to a pixel coordinate of the arbitrary point on the coordinate system of the planar projection image and the pixel coordinate of the projection point of the arbitrary point on the plane in which the wide-angle image is located — S604

**FIG. 6**

| selecting at least one viewing angle | S701 |

↓

| determining an angular relationship between the viewing angle and the space coordinate system | S702 |

↓

| determining the angular relationship between the arbitrary point in the planar projection image and the space coordinate system by utilizing the angular relationship between the viewing angle and the space coordinate system | S703 |

↓

| performing the projective transformation on the wide-angle image to the viewing angle by utilizing the corresponding relationship between the pixel coordinates of the plane projection image and the pixel coordinates of the wide-angle image and the angular relationship between the arbitrary point in the planar projection image and the space coordinate system | S704 |

**FIG. 7**

**FIG. 8A**

**FIG. 8B**

**FIG. 8C**

**FIG. 8D**

**FIG. 8E**

**FIG. 8F**

**FIG. 9**

**FIG. 10**

memory — 1102

input
device — 1103

bus

processor — 1101

output
device — 1104

**FIG. 11**

Europäisches
Patentamt

European
Patent Office

Office européen
des brevets

**EUROPEAN SEARCH REPORT**

Application Number

EP 21 20 6238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 369 796 A (BEIJING BAIDU NETCOM SCI & TEC) 3 July 2020 (2020-07-03) | 1,5-7, 11-15 | INV. G06T3/00 |
| Y | * paragraphs [0007], [0010], [0015] – [0018], [0047], [0064] – [0067]; figure 4 * | 2-4,8-10 | ADD. G08G1/01 G08G1/04 |
| | ----- | | |
| Y | US 5 359 363 A (KUBAN DANIEL P [US] ET AL) 25 October 1994 (1994-10-25) * column 2, line 62 – column 3, line 11; figures 4,5 * * columns 5-8 * | 2-4,8-10 | |
| | ----- | | |
| A | US 2010/208032 A1 (KWEON GYEONGIL [KR]) 19 August 2010 (2010-08-19) * paragraphs [0247] – [0251]; figures 47-50 * | 1-15 | |
| | ----- | | |

TECHNICAL FIELDS
SEARCHED      (IPC)

G08G
G06T

The present search report has been drawn up for all claims

| Place of search | Date of completion of the search | Examiner |
|---|---|---|
| Munich | 30 August 2022 | Krawczyk, Grzegorz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 20 6238

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2022

| Patent document cited in search report | | Publication date | Patent family member(s) | | Publication date |
|---|---|---|---|---|---|
| CN 111369796 | A | 03-07-2020 | NONE | | |
| US 5359363 | A | 25-10-1994 | AT | 208941 T | 15-11-2001 |
| | | | DE | 69429028 T2 | 18-07-2002 |
| | | | EP | 0610863 A1 | 17-08-1994 |
| | | | ES | 2168099 T3 | 01-06-2002 |
| | | | JP | 3012142 B2 | 21-02-2000 |
| | | | JP | H0793526 A | 07-04-1995 |
| | | | JP | 2000083242 A | 21-03-2000 |
| | | | US | 5359363 A | 25-10-1994 |
| US 2010208032 | A1 | 19-08-2010 | AU | 2008283196 A1 | 05-02-2009 |
| | | | AU | 2008283197 A1 | 05-02-2009 |
| | | | CN | 101809991 A | 18-08-2010 |
| | | | CN | 101809993 A | 18-08-2010 |
| | | | CN | 103402052 A | 20-11-2013 |
| | | | KR | 20090012290 A | 03-02-2009 |
| | | | KR | 20090012291 A | 03-02-2009 |
| | | | US | 2010208032 A1 | 19-08-2010 |
| | | | US | 2011181689 A1 | 28-07-2011 |

EPO FORM P0459

For more details about this annex : see Official Journal of the European Patent Office, No. 12/82